# EUROPÄISCHE PATENTSCHRIFT

(11) **EP 0 991 986 B1**
(45) Veröffentlichungstag und Bekanntmachung des Hinweises auf die Patenterteilung: **24.03.2004**
(21) Anmeldenummer: 98939481.2
(22) Anmeldetag: 22.06.1998
(51) Int. Cl.: G05B 19/414

(54) **VERFAHREN ZUR PROZESSÜBERWACHUNG, STEUERUNG UND REGELUNG**
METHOD FOR PROCESS MONITORING, CONTROL AND ADJUSTMENT
PROCEDE DE SURVEILLANCE DE PROCESSUS, DE COMMANDE ET DE REGULATION

(30) Priorität: 23.06.1997 DE 19726544; 11.04.1998 DE 19816273
(43) Veröffentlichungstag der Anmeldung: 12.04.2000
(73) Patentinhaber: Micro-Epsilon Messtechnik GmbH & Co. KG, 94496 Ortenburg (DE)
(72) Erfinder: MANDL, Roland, D-94496 Ortenburg (DE); WISSPEINTNER, Karl, D-94496 Ortenburg (DE)
(74) Vertreter: Naumann, Ulrich, Dr.-Ing.
(86) Internationale Anmeldenummer: PCT/DE1998/001710
(87) Internationale Veröffentlichungsnummer: WO 1998/059281

(56) Entgegenhaltungen:
- EP-B- 0 372 725
- WO-A-97/03389
- WO-A-97/27540
- DE-A- 4 211 678
- US-A- 5 392 207
- DELLEN C ET AL: "AUTOMATED CODE GENERATION FROM GRAPHICAL, REUSABLE TEMPLATES" 14. Oktober 1991 , PROCEEDINGS OF THE DIGITAL AVIONICS SYSTEMS CONFERENCE, LOS ANGELES, OCT. 14 - 17, 1991, NR. CONF. 10, PAGE(S) 299 - 304 , INSTITUTE OF ELECTRICAL AND ELECTRONICS ENGINEERS XP000309258 siehe Seite 303 - Seite 304; Abbildungen 7,8

## Beschreibung

Die Erfindung betrifft ein Verfahren zur Prozessüberwachung, Steuerung und/oder Regelung, bei dem eine Signalverarbeitungsvorschrift auf einer rechnergestützten Benutzeroberfläche durch Anordnen und Verbinden von Symbolen aufgebaut wird und durch den Rechner aus Einzelvorschriften enthaltenden Basismodulen erzeugt wird, wobei jedem Symbol ein Basismodul zugeordnet ist und die Einzelvorschriften der ausgewählten Basismodule entsprechend der graphischen Einbindung der Symbole zur Übertragung und/oder Verarbeitung von Daten miteinander verknüpft werden.

Derartige Prozessüberwachungs-, Steuerungs- und Regelungssysteme (PSR) erzeugen eine Signalverarbeitungsvorschrift aus digitalen Daten, die sich bezüglich der Eingangs- bzw. Ausgangssignale ebenso verhält, wie ein entsprechender Hardwareaufbau aus bspw. digitalen Filtern, PID-Reglern, Regelkarten. Darüber hinaus lassen sich die Signalverarbeitungsvorschriften auch zur Simulation einer Regelstrecke bzw. zur Qualitätssicherung einsetzen. Um die Programmierzeiten von PSR-Systemen gering zu halten, werden dabei graphische Benutzeroberflächen als Ersatz für die Programmierumgebung verwendet. Im mathematischen Sinne handelt es sich bei der Darstellung um eine Graphstruktur, die auf der Benutzeroberfläche aus einzelnen, bspw. Digitalfilter- und PID-Regler-Symbolen aufgebaut werden, wobei entsprechend dieser Graphstruktur auf dem Rechner eine Signalverarbeitungsvorschrift aus Einzelvorschriften zusammengesetzt wird. Meist sind diese Einzelvorschriften in Basismodulen programmiert, wobei bestimmte Rechenoperationen mit Algorithmen in den einzelnen Basismodulen enthalten sind. Die Graphstruktur bzw. die Signalverarbeitungsvorschrift wird schließlich in eine sinnvolle Abarbeitungsreihenfolge übersetzt.

Ein Nachteil dieser bekannten PSR-Systeme besteht darin, dass der Aufbau der Signalverarbeitungsvorschrift aus den Einzelvorschriften kompliziert ist und dass sich bei der Weiterentwicklung der Basismodulgruppen beim Verknüpfen der Basismodule Probleme ergeben, da bei einer Ergänzung des Gesamtsystems durch weitere Einzelvorschriften das gesamte Programmpaket mit der zusammengesetzten Signalvorschrift, wegen der sich ändernden Schnittstelle, ständig neu übersetzt werden muss. Ein Hinzufügen grundsätzlich neuer Funktionalität ist für denjenigen, der nicht im Besitz des Quelltextes der Signalverarbeitungsvorschrift ist, prinzipiell nicht möglich. Die Erweiterbarkeit derartiger PSR-Systeme beschränkt sich auf Funktionalitäten, die bereits bei der Programmierung des PSR-Systems vorgesehen waren.

Die Lehre der vorliegenden Erfindung geht von einem Stand der Technik aus, der sich aus der WO-A-97 27540 ergibt. Mit der dort beschriebenen graphischen Benutzeroberfläche ist es möglich, durch Anordnen von Knoten und Herstellen einzelner Verbindungen zwischen den Knoten eine Netzwerkstruktur zu erzeugen, die nach Compilierung in einen Steuerungscode umgewandelt wird und somit ein statisches Steuerungsprogramm bereitstellt. Bei Multisensoriksystemen ist zur Verarbeitung der Eingangsdaten jedoch häufig eine Synchronisation der anfallenden Datenströme verschiedener Messsensoren notwendig, da diese im allgemeinen asynchron arbeiten und ihre Messsignale nicht in zeitlich festgelegter Form abgeben. Ein wie in der WO-A-97 27540 beschriebenes statisches Steuerungsprogramm ist nicht in der Lage, diesen Anforderungen bei einem zeitlich variierenden Datenaufkommen der Messsensoren gerecht zu werden.

Aus der WO-A-9703389 ist ein Verfahren zur Erstellung eines anwenderspezifischen Funktionsplans für speicherprogrammierbare Steuerungen (SPS) bekannt. Hierbei können einzelne, auf einem Bildschirm visualisierbare Module durch Linienführung von einem Benutzer untereinander verbunden werden, woraus letztendlich ein Funktionsplan für die entsprechende Steuerung erzeugt wird.

Aus der US-A-5 392 207 ist eine Programmierhilfe zur Echtzeitbewegungssteuerung bekannt, bei der einzelne graphische Symbole auf einem Computerbildschirm miteinander verbunden werden. Die so erzeugte Programmstruktur wird nach entsprechender Übersetzung (Compilierung) über eine serielle Verbindung auf einen Steuerrechner übertragen, mit dem dann beispielsweise ein Motor angesteuert werden kann.

Die EP-B-0 372 725 betrifft einen mikroprozessorgesteuerten Motorcontroller für schrittweise Verarbeitungskreisläufe, insbesondere für ein Postverteilersystem. Hierbei sind mehrere Motoren jeweils mit einem Controller verbunden und werden durch diesen angesteuert. Die einzelnen Komponenten dieses Systems sind über ein Bussystem miteinander verbunden.

Ausgehend von dem aus der WO-A-97 27540 bekannten Verfahren liegt der Erfindung die Aufgabe zugrunde, ein gattungsbildendes Verfahren zur Prozessüberwachung, Steuerung und/oder Regelung derart auszugestalten und weiterzubilden, dass eine effiziente Datenverarbeitung, insbesondere von unsymmetrisch verteilten Datenmengen, durch die Signalverarbeitungsvorschrift des zusammengestellten, graphisch repräsentierten Netzwerks hinreichend berücksichtigt wird.

Das erfindungsgemäße Verfahren zur Prozessüberwachung, Steuerung und/oder Regelung löst die voranstehende Aufgabe durch die Merkmale des Patentanspruchs 1. Danach ist das eingangs genannte Verfahren dadurch gekennzeichnet, dass Eingangsdaten durch die gebildete Signalverarbeitungsvorschrift zur Erzeugung von Ausgangssignalen abgearbeitet werden und der dabei entstehende Datenfluss durch eine Ablaufsteuerung gesteuert wird, die eine dynamische Verarbeitungsreihenfolge erzeugt.

Durch die Zuordnung jeweils eines Basismoduls zu einem möglichen, auf der Benutzeroberfläche anordenbaren Symbol, insbesondere mit einer exakt vorgegebenen Schnittstelle, über die auch diverse Parameter zur Anpassung der Einzelvorschriften übergebbar sind, wird die Wiederverwendung der Basismodule und die schnelle Entwicklung von Verfahren zur Prozeßüberwachung, Steuerung und Regelung erleichtert. Da jedem individuellen Symbol exakt ein Basismodul zugeordnet werden kann, können die Symbole in Programmbibliotheken abgelegt und über die Benutzeroberfläche abgerufen werden, so daß die Signalverarbeitungsvorschrift aus den in den Basismodulen enthaltenen Einzelvorschriften beliebig aufbaubar ist. Diese Art der gekapselten Modellierung kann vorteilhafterweise durch objektorientierte Programmiersprachen unterstützt werden. Es ist ein besonderer Vorteil, daß die Basismodule entsprechend der Einbindung der Symbole auf der Benutzeroberfläche einfach mit ihren Schnittstellen verknüpfbar sind.

Erfindungsgemäß ist demnach erkannt worden, dass nicht auf die in der WO-A-97 27540 beschriebene Benutzeroberfläche samt deren Flexibilität zur Anordnung und Verbindung von einzelnen Symbolen zur Erstellung von einer Signalverarbeitungsvorschrift verzichtet werden muss. Das in der WO-A-97 27540 erzeugte statische Programm ist jedoch in der Regel nicht in der Lage, die Verarbeitung des zeitlich sich verändernden Datenaufkommens zu bewerkstelligen. Daher werden die Eingangsdaten, die insbesondere von Sensoren anliegen, durch die gebildete Signalverabeitungsvorschrift zur Erzeugung von Ausgangssignalen abgearbeitet und der dabei entstehende Datenfluss wird durch eine Ablaufsteuerung gesteuert, die eine dynamische Verarbeitungsreihenfolge erzeugt.

Die Einbindung der Symbole in der Signalverarbeitungsvorschrift ist auf der Benutzeroberfläche bspw. als Verbindungslinie zwischen einem Ausgang eines letzten Symbols und dem Eingang des nachfolgenden Symbols dargestellt. Diese Verbindungslinie entspricht bevorzugt einer Schnittstelle zwischen zwei Basismodulen. Der Datenfluss der über derartige Verbindungslinien bzw. Schnittstellen übertragen wird, leitet sich in der Regel von den Grunddatentypen der zugrundeliegenden Programmiersprache ab. Beispielsweise werden Einzelwerte, Matrizen, Records oder spezielle Datenfelder dieser Grunddatentypen übertragen. Durch die Ablaufsteuerung kann vorteilhaft auch die Bearbeitung von komplexen Datentypen beliebiger Struktur unterstützt werden. Die Einleitung einer Datenübertragung zwischen den Basismodulen erfolgt durch die Ablaufsteuerung. Die Festlegung der Art der Übertragung sowie die Überprüfung der Zulässigkeit (type checking) einer Verbindung ist Aufgabe der beteiligten Basismodule.

Bevorzugt wird der Datenfluss durch die Signalverarbeitungsvorschrift in Form von einzelnen Basismodulen zugeordneten Datenpaketen, deren Paketgröße insbesondere frei festlegbar ist, abgearbeitet und die Ablaufsteuerung ermittelt die Rechenbereitschaft der Basismodule. Aus Effizienzgründen erfolgt die Übertragung der Daten in der Signalverarbeitungsvorschrift blockweise. Mehrere Blöcke zusammen bilden ein Datenpaket. Neben den relevanten Übertragungsdaten sind jedem Paket weitere Informationen hinzugefügt, insbesondere Paketname, Paketstatus, Wertebereich, physikalische Einheit, Skalierfaktor, Abtastrate. Der Paketstatus informiert über die Zugehörigkeit von Datenblöcken zu einem Symbol bzw. Basismodul. Da ein Symbol einem elektronischen Bauelement entspricht, bestimmt damit der Paketstatus auch die Zugehörigkeit des Datenblocks zu dem simulierten Bauelement, bspw. als Eingangsdaten für einen PID-Regler. Mit Hilfe der Zusatzinformationen zur Abtastrate innerhalb des Datenpakets können unterschiedliche Abtastraten von Datenpaketen erkannt und behandelt werden. Die Verarbeitung von Signalen unterschiedlicher Abtastraten wird durch die Ablaufsteuerung dadurch unterstützt, dass zu Zeitpunkten, an denen kein weiteres Verarbeitungsmodul rechenbereit ist, die Liste der Quellmodule gepollt wird, bis eine oder mehrere rechenbereite Quellmodule gefunden werden. Je nach verwendeter Abtastrate der Quellmodule wird dies zu unterschiedlichen Zeitpunkten der Fall sein. Alle Nachfolger der rechenbereiten Quellmodule werden im nächsten Verarbeitungszyklus behandelt usw. (Datenflussprinzip). Die Ablaufsteuerung regelt die Bearbeitung der Einzelvorschriften der Basismodule bzw. die Verarbeitung der Daten eines Basismoduls in geeigneter Reihenfolge. Insbesondere muss jedes Basismodul zusammen mit seinen Daten mehrfach abgearbeitet werden, so dass am Eingang eines Basismoduls kein Datenstau auftritt. Die Ablaufsteuerung erzeugt vorteilhaft keine statische Verarbeitungsreihenfolge, die nur von der Struktur des Graphen abhängen würde, so dass eine besonders effiziente Datenverarbeitung bei Zyklen, Mehrfachbearbeitung von Einzelvorschriften und unsymmetrisch verteilten Datenmengen in der Signalverarbeitungsvorschrift ermöglicht wird.

Bei einer besonders bevorzugten Weiterbildung der Erfindung stellt die Ablaufsteuerung bei jeder Änderung der Eingangsdaten an einem Basismodul dessen Rechenbereitschaft fest. Bevorzugt wird dabei das Vorhandensein aller benötigten Eingangsdaten am Basismodul und eine dem Basismodul zugeordnete Verarbeitungspriorität abgefragt, um die Verarbeitung der Datenpakete durch die dem Basismodul entsprechende Einzelvorschrift freizugeben. Es wird dabei das im folgenden beschriebene dynamische Verfahren eingesetzt, das in der Lage ist, Zyklen zu behandeln. Ein Basismodul meldet sich bei Ablaufsteuerung rechenbereit, wenn es in der Lage ist, seine Einzelvorschrift auszuführen. Dabei werden zwei Modularten unterschieden: Verarbeitungsmodule können nur dann in den Zustand rechenbereit wechseln, wenn sich die Menge der an den Eingängen anliegenden Daten verändert, während Quellmodule auch ohne Änderung von Eingangsdaten, soweit überhaupt Eingänge vorhanden sind, rechenbereit sein können. Unmittelbar nach der Bearbeitung befindet sich ein Basismodul stets im Zustand nicht rechenbereit.

Dieses Verfahren ist besonders vorteilhaft, wenn im Signalgraphen mehrere Quellmodule existieren, die unterschiedliche Datenmengen zu unterschiedlichen Zeitpunkten bzw. mit verschiedenen Abtastraten liefern. Dies ist vor allem bei Multisensoriksystemen der Fall, die verschiedene Messgrößen gleichzeitig erfassen. Durch die Feststellung der Rechenbereitschaft ist eine Synchronisation der erzeugten Datenströme mit unterschiedlicher Abtastrate möglich, ohne dass durch Überabtastung langsamerer Vorgänge unverhältnismäßig hohe Datenmengen entstehen. Durch die Abarbeitung der Datenpakete eines Basismoduls bei Rechenbereitschaft können auch zeitlich hintereinander eingehende Messgrößen vorteilhaft und effizient abgearbeitet werden. Die Feststellung der Rechenbereitschaft, insbesondere durch die Basismodule selbst, ist ein wichtiges Instrument zur Synchronisation und Zyklenbehandlung und eine der Voraussetzungen für die Erweiterbarkeit der Programmbibliothek. Die Feststellung der Rechenbereitschaft ist aber auch eine der wichtigen Voraussetzungen zur Behandlung von Zyklen im Signalgraphen. Durch eine Rückkopplung (Zyklus) im Signalgraph werden Module, die im entsprechenden Verarbeitungszyklus bereits einmal rechenbereit waren, wieder in diesen Zustand versetzt. Durch die Erkennung des Start-Datenpaket-Status an einem der Eingänge kann der (ansonsten unendliche) Zyklus unterbrochen werden. In diesem Fall meldet sich das "Rückkopplungsmodul" nicht mehr rechenbereit und der Bearbeitungsvorgang wird mit den in der Warteschlange verbliebenen Modulen fortgesetzt.

Bevorzugt werden, ausgehend von Quellmodulen, jene Basismodule auf Rechenbereitschaft getestet, deren Eingangsdaten sich, insbesondere durch Abarbeitung einer Einzelvorschrift eines vorhergehenden Basismoduls, ändern. Bei der Abarbeitung werden zunächst alle Quellmodule auf Rechenbereitschaft getestet. Rechenbereite Quellmodule werden bearbeitet und alle weiteren Basismodule, bei denen sich dadurch eine Änderung der Eingangsdaten ergeben könnte, also alle direkten Nachfolger, werden ihrerseits auf Rechenbereitschaft getestet und ggf. bearbeitet. Beim nächsten Schritt werden wiederum deren Nachfolger auf Rechenbereitschaft getestet usw. Dieser Vorgang wird solange fortgesetzt, bis keine rechenbereiten Module mehr vorhanden sind. Wenn keine rechenbereiten Basismodule mehr vorhanden sind, werden wieder die Einzelvorschriften der Quellmodule abgearbeitet. Durch dieses Verfahren wird sichergestellt, dass alle rechenbereiten Verarbeitungsmodule bearbeitet werden, da eine Änderung der Eingangsdaten und damit eine Zustandsänderung nur durch die Bearbeitung eines unmittelbaren Vorgängers ausgelöst werden kann. Andererseits werden Basismodule nur dann auf rechenbereitschaft getestet, wenn eine hohe Wahrscheinlichkeit für eine Zustandsänderung besteht, was die Effizienz des Verfahrens ausmacht.

Bevorzugt wird der Datenfluss zwischen den verknüpften Basismodulen, insbesondere bei mehreren rechenbereiten Basismodulen, durch Vergabe von Prioritäten gesteuert. Die Auswahl bei mehreren gleichzeitig rechenbereiten Modulen lässt sich so durch die zugeordnete Priorität leicht steuern.

Bei einer anderen Weiterbildung des Verfahrens wird mittels eines Datenpaketstatus eine Synchronisation zeitlich unterschiedlich an den obligatorischen Eingängen eines Basismoduls ankommender Datenpakete, insbesondere bei unterschiedlichen Abtastraten, vorgenommen. Die Synchronisation ist erforderlich, da zeitlich versetzt anfallende Daten über die Einzelvorschriften der Basismodule zu einer zeitlich eindeutigen Gesamtaussage verknüpft werden müssen, die dann als Ausgangssignal wiederum an das nächste Basismodul weitergegeben wird. Durch die Synchronisation ist es aber auch vorteilhaft möglich, in verschiedenen Zweigen der Signalverarbeitungsvorschrift unterschiedliche Verarbeitungszeiten oder eine zeitlich versetzte Erfassung an Messstationen vorzusehen. In der Signalverarbeitungsvorschrift, insbesondere in den Basismodulen, gibt es Synchronisationsauswerteelemente, die Informationen über die Bauteilzugehörigkeit in den Datenpaketen auswerten.

Zur Synchronisation und Zyklenbehandlung von Datenströmen aus asynchronen Datenquellen wird der Paketstatus benutzt. Rechnet ein Basismodul auf mehreren Datenblöcken, so wird sichergestellt, dass an jedem obligatorischen Eingang des Basismoduls, an dem Daten synchron anliegen müssen, Datenblöcke mit dem gleichen Paketstatus verarbeitet werden. Liegen an einem Eingang noch keine Daten an, so kann keine Rechenbereitschaft festgestellt werden. Damit wird die Bearbeitung bis zum nächsten Aufruf des Basismoduls durch die Ablaufstellung verzögert, bis die Eingangsdaten vollständig vorhanden sind, um dann mit der Verarbeitung beginnen zu können. Diese Synchronisation durch Warten auf noch fehlende Datenblöcke wird dadurch vorteilhaft unterstützt, dass die Ablaufsteuerung bei jedem eintreffenden Datenpaket einen Aufruf erzeugt.

Viele Einzelvorschriften ändern die Datenrepräsentation, so erzeugt bspw. eine polynomiale Regression aus zwei Vektoren mit x- und y-Werten einen Satz von Polynomkoeffizienten. Durch die Verwendung von Paketstart- bzw. Paketendesignalen und weiterer Informationen zu den Datenpaketen können Statusinformationen in Ausgangsdaten eines Basismoduls die Statusinformationen ihrer zugrundeliegenden Eingangsdaten unabhängig von der Ausgabedatenlänge propagieren. Ein Datenpaket aus mehreren Blöcken am Eingang eines Basismoduls kann also ein Datenpaket bestehend aus nur einem Komplettblock am Ausgang erzeugen. Spezielle Algorithmen zur Datenpaketverarbeitung können dabei solange Daten sammeln, bis die Paketende-Information erreicht ist. Beim Eintreffen von Paketstart-Information können notwendige Initialisierungen vorgenommen werden, wodurch eine korrekte und laufzeitunabhängige Behandlung von Zyklen im Signalgraphen möglich ist.

Durch die Synchronisation der Daten werden folgende Vorteile erzielt. Es können Daten verarbeitet werden, die an evtl. nicht genau vorhersagbaren Zeitpunkten am Eingang eines Basismoduls anliegen. Weg- oder Verarbeitungszeitdifferenzen in verschiedenen Zweigen der Signalverarbeitungsvorschrift können korrigiert werden. Die Verarbeitung großer Datenmengen, die eine Totzeit in nicht relevanten Bereichen zwischen Bauteilen erzeugen, kann vermieden werden.

Bevorzugt können die Eingangsdaten, Basismodulparameter oder Ausgangsdaten der Signalverarbeitungsvorschrift auf der Benutzeroberfläche graphisch dargestellt werden. Dadurch können Datenänderungen, insbesondere Regelgrößenänderungen, vorteilhaft für den Benutzer auf der Benutzeroberfläche angezeigt werden.

Die Aufgabe wird aber auch erfindungsgemäß durch die Merkmale des Anspruches 10 gelöst. Gemäß Kennzeichen wird beim Zusammensetzen der Signalverarbeitungsvorschrift aus den einzelnen Basismodulen anhand der den zu verknüpfenden Basismodulen zugeordneten Zusatzinformationen überprüft, ob eine Verbindung zweier benachbarter Basismodule zulässig ist. Dadurch wird bereits beim Zusammenstellen der Symbole beim Zeichnen des Graphen, während dem Verbinden zweier Symbole bei einem Verknüpfungsvorgang, zwischen einem Ausgang eines Vorgängermoduls und einem Eingang eines Zielmoduls geprüft, ob eine Verbindung beider Symbole und damit der zugeordneten Basismodule erlaubt ist. Dabei wird bevorzugt die Übereinstimmung eines vorgegebenen Sendedatentyps mit dem gewünschten Empfangsdatentyps am Eingang des Basismoduls überprüft. Es kann vorgesehen sein, dass die Validierung nicht zu einer Datentypenbeschränkung führt. Bspw. kann lediglich eine Warnung angezeigt werden, jedoch die Verbindung möglich sein. Dies ist gerade dann von Vorteil, wenn im Rahmen einer Weiterentwicklung von Basismodulgruppen eine andere Art des Informationsaustausches oder neue komplexere Datentypen verwendet werden sollen. Die Validierung solch komplexer Datentypen erfolgt somit vorteilhafter Weise nicht bei der Bearbeitung der Signalverarbeitungsvorschrift während der Datenübertragung, sondern bei der Erstellung der Signalverarbeitungsvorschrift. Durch die frühe Validierung beim Zusammenstellen der Signalverarbeitungsvorschrift werden leicht vermeidbare Fehler vor Ablauf der Datenverarbeitung in der Signalverarbeitungsvorschrift erkannt. Dabei wird die Erweiterung der Algorithmenbibliothek bestehend aus vielen wahlweise verwendbaren Basismodulen nicht durch eine Begrenzung der durch die Benutzeroberfläche behandelbaren Datentypen eingeschränkt.

Bei einer besonders bevorzugten Weiterbildung des erfindungsgemäßen Verfahrens wird beim Abarbeiten der Einzelvorschrift eines Basismoduls, insbesondere durch Überprüfung der Zulässigkeit des Datentyps, der Einheiten oder der Abtastraten der Informationsdaten, eine zusätzliche Validierung durchgeführt. Dies führt zu einer mehrstufigen Validierung komplexer Datentypen zwischen den Basismodulen durch die Basismodule selbst, die die Zusatzinformationen bei Datenempfang überprüfen und auswerten. Durch die Trennung in eine Validierung bei der Zusammenstellung der Signalverarbeitungsvorschrift und die Validierung bei der Datenverarbeitung benötigt die Benutzeroberfläche zunächst keine Kenntnis über die bei einer Weiterentwicklung in Zukunft möglicherweise verwendeten Datentypen. Komplexe Datentypen, d.h. zusammengesetzte Datentypen, können deswegen frei definiert werden. Damit kann das System jederzeit an neue Erfordernisse angepasst werden.

Bevorzugt erfolgt die Validierung der Zulässigkeit der Verbindung zweier Basismodule gerichtet, wobei die Zulässigkeit der Verbindung vom vorhergehenden zum folgenden Basismodul und umgekehrt überprüft wird. Bereits bei der Erstellung des Graphen auf der Benutzeroberfläche erfolgt die Validierung in zwei Richtungen. Damit kann von beiden Seiten eine Liste möglicher kompatibler Typen geprüft werden. Ist das Quell- oder Zielmodul zu mehreren Datentypen kompatibel, kann es auf diese Weise den Wunschtyp übernehmen und an weitere Ein- und Ausgänge weiterpropagieren. Bspw. kann bei einem Multiplexer nach einer einzigen Ein- oder Ausgangsverbindung schon feststehen, welche weiteren Datentypen an dem anderen Ein- bzw. Ausgängen zu erwarten sind.

Bevorzugt wird auch die Zulässigkeit des Informationsaustausches, insbesondere über gemeinsame Speicherbereiche oder Daten überprüft. Die Validierung der Kommunikationsart regeln bevorzugt die beteiligten Basismodule untereinander. Auf diese Weise kann die Kommunikation jederzeit auf maximale Geschwindigkeit oder maximalen Programmierkomfort umgestellt werden. Aufgrund der hierarchischen Datenstruktur (Datenblöcke und Datenpakete als Zusammenfassung mehrerer Blöcke) und der mitübertragenen Zusatzinformationen (Abtastraten, Einheiten, Wertebereiche etc.) zu den Daten können logische Validierungen während der Abarbeitung des Graphen durchgeführt werden, z.B. durch Addition gleicher Abtastraten bzw. Einheiten. So wird dadurch während der Abarbeitung bspw. erkannt, wenn Messdaten, die hintereinander mehrere Messstellen durchlaufen, von einer der Messsstellen fehlen. Der Fehler kann z.B. auftreten, weil die Verbindung zu einer der Messstellen unterbrochen ist.

Mit Hilfe der hierarchischen Datenstruktur und der Zusatzinformation lassen sich aber auch logische Fehler in der Designphase des Signalgraphen erkennen, z.B. wenn versucht wird, Messdaten zu addieren, die mit unterschiedlichen Abtastraten aufgenommen wurden, oder die verschiedene physikalische Einheiten besitzen. Vorteilhafterweise wird durch die Kombination der frühen Validierung eine größtmögliche Erweiterbarkeit des Systems erreicht.

Eine Verbindung zwischen den Basismodulen, also eine Kante des Signalgraphen, kann auch durch eine Netzwerkverbindung repräsentiert werden. Damit ist eine dezentrale Datenerfassung/Auswertung realisierbar, die durch die Ablaufsteuerung (reine Datenflusssteuerung) ebenfalls unterstützt wird.

Mehrere Instanzen einer Ablaufsteuerung und damit mehrere Signalgraphen können auch parallel (Zeitscheibe, preemptives Multitasking) betrieben werden. Die Kommunikation erfolgt datenflussorientiert. Ferner wird die Hierarchisierung von Signalgraphen (Makrobildung) durch die Ablaufsteuerung unterstützt.

Bevorzugt wird bei unzulässiger Verknüpfung von Basismodulen bzw. bei Daten mit unzulässigen Datenformaten, eine Fehlermeldung insbesondere durch die beteiligten Basismodule oder die Benutzeroberfläche, erzeugt.

Weitere vorteilhafte Weiterbildungen der Erfindung sind in den Unteransprüchen definiert. Drei Ausführungsbeispiele der Erfindung werden im folgenden unter Hinweis auf die beigefügten Zeichnungen beschrieben. Es stellen dar:
- Fig. 1: eine Ansicht eines Computerbildschirms mit einer rechnergeschützten Benutzeroberfläche während der Ausführung des erfindungsgemäßen Verfahrens,
- Fig. 2: eine schematische Darstellung einer Signalverarbeitungsvorschrift nach einem zweiten Ausführungsbeispiel und
- Fig. 3: eine schematische Darstellung einer Signalverarbeitungsvorschrift zur Stemmtiefenmessung an Ventilen eines Antiblockiersystems nach einem dritten Ausführungsbeispiel.

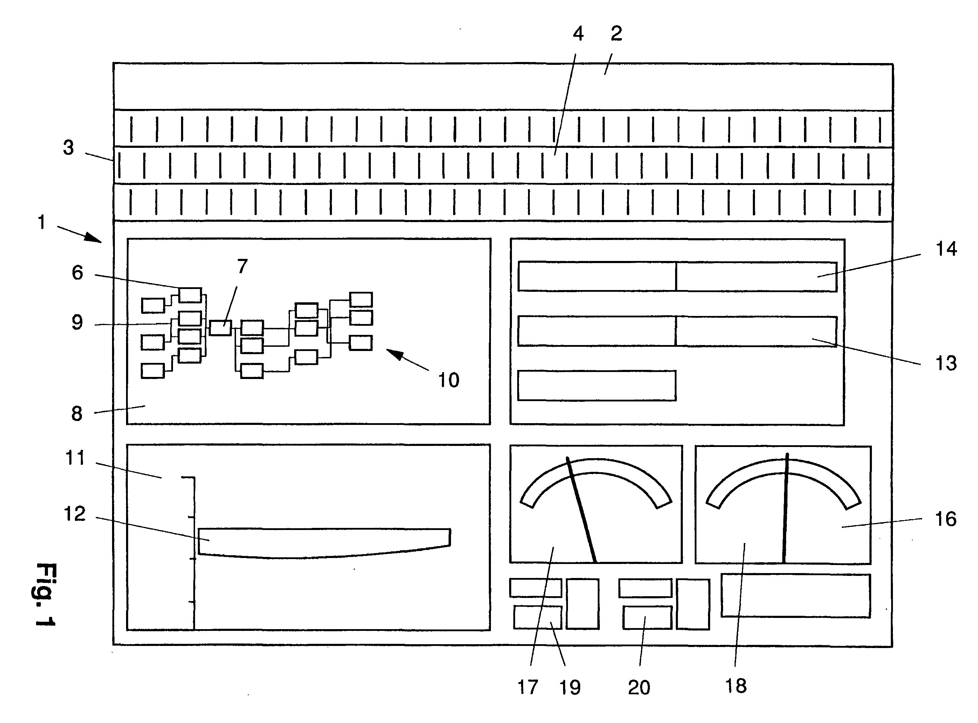

Fig. 1 zeigt eine auf einem Computerbildschirm 1 dargestellte Benutzeroberfläche 2 mit einer an der Oberseite angeordneten Befehlszeile 3 mit einzelnen Symbolauswahlfeldern 4. Bei Betätigung eines der Symbolauswahlfelder 4 entsteht auf der Benutzeroberfläche 2 ein Symbol 6 bzw. 7 das bspw. durch Computerhilfsmittel, wie einer Maus, in einem dafür vorgesehenen Bereich 8 der Benutzeroberfläche 2 angeordnet wird. Jedes der Symbole 6 bzw. 7 steht dabei für ein bestimmtes Basismodul, welches typische Bauelemente für die Prozessüberwachung, Steuerung und Regelung digitaltechnisch nachbildet bzw. simuliert.

Dabei können bspw. folgende Symbole ausgewählt werden: Datenladen aus einer Datenbank, Zufallsgenerator, Funktionsgenerator für Sinus-, Dreieck-, Sägezahn-, Rechteck-, Impulssignale, Laden einer Textdatei, Steuersignale mit einstellbarem Puls-/Pausenverhältnis, Schalter, Konstantwertgeber, Bedienelement für Analogwerteingabe, Eingabe ganzzahliger Werte (Steuersignal für Muliplexer), Module zur statistischen Verarbeitung wie Standardabweichung, Mittelwert, Sortiermodul mit Steuerausgängen, Herabsetzen der Abtastrate des Signals, schnelle und diskrete Fourier-Transformation, digitaler IIR-Filter, Filter wie Tiefpass-, Hochpass-, Bandpass-, Bessel-, Tschebyschef-, Butterworth-Filter, Triggerschaltungen, statistische Filter zum Glätten von Funktionsverläufen, Module zum Konvertieren parallel anliegender Parameterwerte in einen seriellen Datenstrom, Serialisierung mehrerer skalarer und vektorieller Daten in einen seriellen Datenstrom, Fehlermodul, logische Gatter wie AND-, OR-Glieder, Flip-Flops, Monoflops, Binärcodierer, Skalierungsmodule, Module zur Erzeugung arithmetischer Grundfunktionen, Kommunikationsmodule zur Übertragung von Messdaten, Treiber für Signalprozessorkarten, I/O-Einheiten und Multiplexer für dezimale oder binäre Signale, Fuzzylogic und Mustererkennungsmodule. Natürlich ist diese Liste lediglich beispielhaft und beliebig erweiterbar. Der Schutzbereich der Erfindung beschränkt sich nicht lediglich auf diese Beispiele.

Die Symbole 6 bzw. 7 werden im Bereich 8 der Benutzeroberfläche 2 an einer bestimmten Position angeordnet und durch eine Verbindungslinie 9 miteinander verbunden. Durch derartige Verbindungslinien 9 sind auch Rückkopplungsschleifen erzeugbar. Auf diese Weise entsteht durch Auswahl, Verbinden und Wiederholen der Vorgänge die als Signalgraph 10 dargestellte Signalverarbeitungsvorschrift.

In einem weiteren Bereich 11 der Benutzeroberfläche 2 ist bspw. ein Dickenprofil 12 der kapazitiven Banddickenmessung von Metallfolien dargestellt. In einem weiteren Bereich 13 der Benutzeroberfläche 2 sind Messergebnisse wie die Bandbreite, Dicke des beispielhaften Profils usw. in Form einer Digitalanzeige 14 dargestellt.

In einem Bereich 16 der Benutzeroberfläche 2 werden auf je einer Analoganzeige 17 und 18 zwei Regelgrößen zur statistischen Regelung des Prozesses visualisiert. Zwei Eingabefelder 19 und 20 dienen zur Vorgabe des Dicken-Sollwerts und zur Auswahl des Messmoduls.

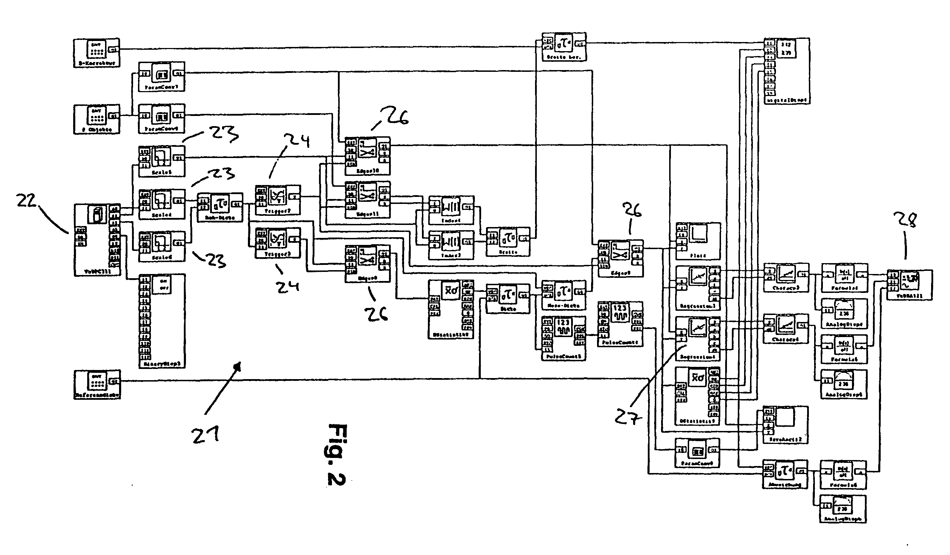

Der in Fig. 2 dargestellte aus Symbolen aufgebaute Signalraph 21 der Signalverarbeitungsvorschrift wird bei Messaufgaben zur Prozessvisualierung und Steuerung eingesetzt. Der Signalgraph 21 weist u.a. ein Modul 22 zur Datenaquisition, mehrere Skalierungsmodule 23, die die Messsignale skalieren, Triggermodule 24, Module 26, die Teildatensätze aus Datenpaketen ausschneiden und Regressionsanalysemodule 27, in dessen Folge charakteristische Kennwerte wie Keil- oder Hohlform des Dikkenprofils numerisch berechnet werden. Diese Kennwerte zur Regelung des Prozesses werden an einem Ausgabemodul 28 an eine Produktionsmaschine ausgegeben.

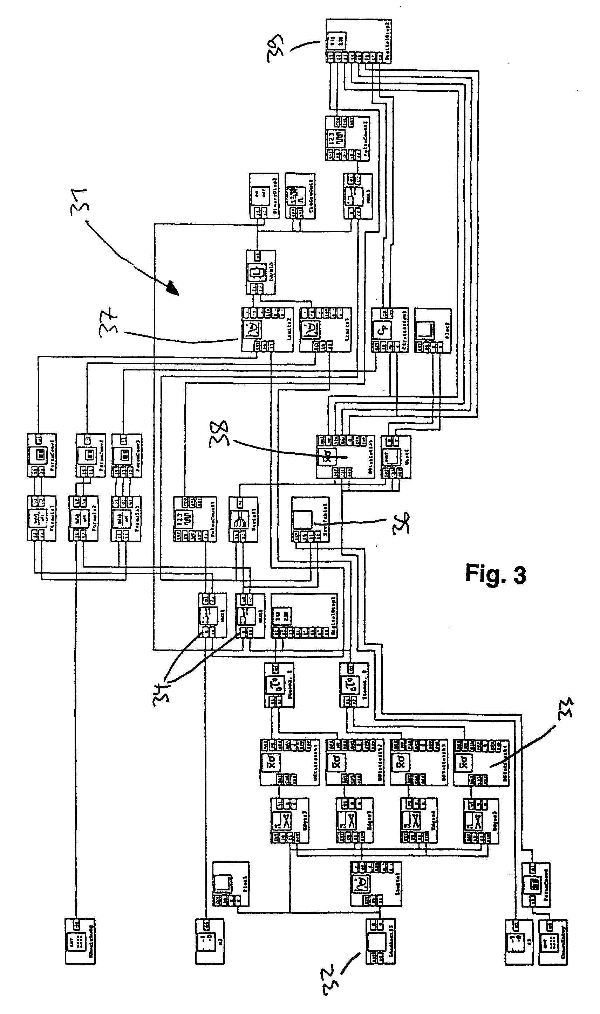

In dem in Fig. 3 dargestellten Signalgraphen 31 zur Stemmtiefenmessung an Ventilen eines Antiblockiersystems wird anstelle eines Endlos-Bandmaterials Stückgut vermessen. In ein nicht dargestelltes Ventilgehäuse wird ein Dichtring eingepresst, dessen stabiler und passgenauer Sitz durch eine optische Triangulationsmessung überwacht werden soll. Bei der Simulation durch den Signalgraphen 31 werden Messwerte durch das Einlesemodul 32 aus einer Datei ausgelesen. Vier Bereiche an unterschiedlichen Stellen des Ventilgehäuses werden zur Qualitätskontrolle herangezogen. In der Modulgruppe 33 werden daraus zwei Differenzen gebildet und die gewünschte Stemmtiefe wird jeweils berechnet und dargestellt. Durch die Multiplexmodule 34 im Signalgraphen 31 wird erreicht, dass die Daten einer Hauptmessung in einem anderen Teilgraph ebenfalls verarbeitet werden können. Neben einer Speicherung und Archivierung der Messdaten durch die Modulgruppe 36 wird auch eine Sortierung in Gut-/Schlecht-Teile bei der Modulgruppe 37 vorgenommen. In der Modulgruppe 38 wird eine Prozessstatistik einer Produktionsschicht vorgenommen. An einem Ausgangsmodul 39 wird das Sortierergebnis in Form digitaler Ausgangsdaten zur Verfügung gestellt.

## Patentansprüche

1. Verfahren zur Prozessüberwachung, Steuerung und/oder Regelung, bei dem eine Signalverarbeitungsvorschrift auf einer rechnergestützten Benutzeroberfläche (2) durch Anordnen und Verbinden von Symbolen (6, 7) aufgebaut wird und durch den Rechner aus Einzelvorschriften enthaltenden Basismodulen (22, 23, 24, 26, 27, 28; 32, 33, 34, 36, 37, 38, 39) erzeugt wird, wobei jedem Symbol (6, 7) ein Basismodul (22, 23, 24, 26, 27, 28; 32, 33, 34, 36, 37, 38, 39) zugeordnet ist und die Einzelvorschriften der ausgewählten Basismodule (22, 23, 24, 26, 27, 28; 32, 33, 34, 36, 37, 38, 39) entsprechend der graphischen Einbindung der Symbole (6, 7) zur Übertragung und/oder Verarbeitung von Daten miteinander verknüpft werden,
**dadurch gekennzeichnet,**
**dass** Eingangsdaten durch die gebildete Signalverarbeitungsvorschrift zur Erzeugung von Ausgangssignalen abgearbeitet werden und der dabei entstehende Datenfluss durch eine Ablaufsteuerung gesteuert wird, die eine dynamische Verarbeitungsreihenfolge erzeugt.

2. Verfahren nach Anspruch 1, **dadurch gekennzeichnet, dass** der Datenfluss durch die Signalverarbeitungsvorschrift in Form von einzelnen Basismodulen (22, 23, 24, 26, 27, 28; 32, 33, 34, 36, 37, 38, 39) zugeordneten Datenpaketen, deren Paketgröße insbesondere frei festlegbar ist, abgearbeitet wird und die Ablaufsteuerung die Rechenbereitschaft der Basismodule (22, 23, 24, 26, 27, 28; 32, 33, 34, 36, 37, 38, 39) ermittelt.

3. Verfahren nach Anspruch 2, **dadurch gekennzeichnet, dass** die Ablaufsteuerung bei jeder Änderung der Eingangsdaten an einem Basismodul (22, 23, 24, 26, 27, 28; 32, 33, 34, 36, 37, 38, 39) dessen Rechenbereitschaft feststellt, wobei insbesondere das Vorhandensein aller benötigten Eingangsdaten am Basismodul (22, 23, 24, 26, 27, 28; 32, 33, 34, 36, 37, 38, 39) und eine dem Basismodul (22, 23, 24, 26, 27, 28; 32, 33, 34, 36, 37, 38, 39) zugeordnete Verarbeitungspriorität abgefragt wird, um die Verarbeitung der Datenpakete durch die dem Basismodul (22, 23, 24, 26, 27, 28; 32, 33, 34, 36, 37, 38, 39) entsprechende Einzelvorschrift freizugeben.

4. Verfahren nach Anspruch 2 oder 3, **dadurch gekennzeichnet, dass** ausgehend von Quellmodulen jene Basismodule (22, 23, 24, 26, 27, 28; 32, 33, 34, 36, 37, 38, 39) auf Rechenbereitschaft getestet werden, deren Eingangsdaten sich, insbesondere durch die Abarbeitung einer Einzelvorschrift eines vorhergehenden Basismoduls (22, 23, 24, 26, 27, 28; 32, 33, 34, 36, 37, 38, 39), ändern.

5. Verfahren nach einem der Ansprüche 1 bis 4, **dadurch gekennzeichnet, dass** bei fehlender Rechenbereitschaft aller Basismodule (22, 23, 24, 26, 27, 28; 32, 33, 34, 36, 37, 38, 39) die Verarbeitung der Eingangsdaten bzw. bei den Quellmodulen (22, 32) fortgeführt wird.

6. Verfahren nach einem der Ansprüche 1 bis 5, **dadurch gekennzeichnet, dass** der Datenfluss zwischen den verknüpften Basismodulen, insbesondere bei mehreren rechenbereiten Basismodulen (22, 23, 24, 26, 27, 28; 32, 33, 34, 36, 37, 38, 39), durch Vergabe von Prioritäten gesteuert wird.

7. Verfahren nach einem der Ansprüche 1 bis 6, **dadurch gekennzeichnet, dass** mittels eines Datenpaketstatus eine Synchronisation zeitlich unterschiedlich an den obligatorischen Eingängen eines Basismoduls (22, 23, 24, 26, 27, 28; 32, 33, 34, 36, 37, 38, 39) ankommender Datenpakete, insbesondere bei unterschiedlichen Abtastraten, erfolgt.

8. Verfahren nach einem der Ansprüche 1 bis 7, **dadurch gekennzeichnet, dass** Eingangsdaten, Basismodulparameter oder Ausgangsdaten der Signalverarbeitungsvorschrift auf der Benutzeroberfläche (2) graphisch dargestellt werden.

9. Verfahren zur Prozessüberwachung, Steuerung und/oder Regelung nach einem der Ansprüche 1 bis 8, bei dem eine Signalverarbeitungsvorschrift aus Basismodulen (22, 23, 24, 26, 27, 28; 32, 33, 34, 36, 37, 38, 39) zusammengesetzt wird, einzelne Basismodule (22, 23, 24, 26, 27, 28; 32, 33, 34, 36, 37, 38, 39) zur Übertragung von Informationsdaten miteinander über Schnittstellen verbunden und die Daten in den Basismodulen (22, 23, 24, 26, 27, 28; 32, 33, 34, 36, 37, 38, 39) der Signalverarbeitungsvorschrift verarbeitet werden,
**dadurch gekennzeichnet, dass** beim Zusammensetzen der Signalverarbeitungsvorschrift aus den einzelnen Basismodulen (22, 23, 24, 26, 27, 28; 32, 33, 34, 36, 37, 38, 39) anhand der den zu verknüpfenden Basismodulen (22, 23, 24, 26, 27, 28; 32, 33, 34, 36, 37, 38, 39) zugeordneten Zusatzinformationen überprüft wird, ob eine Verbindung zweier benachbarter Basismodule (22, 23, 24, 26, 27, 28; 32, 33, 34, 36, 37, 38, 39) zulässig ist.

10. Verfahren nach Anspruch 9, **dadurch gekennzeichnet, dass** beim Abarbeiten einer Einzelvorschrift eines Basismoduls (22, 23, 24, 26, 27, 28; 32, 33, 34, 36, 37, 38, 39), insbesondere durch Überprüfung der Zulässigkeit des Datentyps, der Einheiten oder der Abtastraten der Informationsdaten, eine zusätzliche Validierung erfolgt.

11. Verfahren nach Anspruch 9 oder 10, **dadurch gekennzeichnet, dass** die Validierung der Zulässigkeit der Verbindung zweier Basismodule (22, 23, 24, 26, 27, 28; 32, 33, 34, 36, 37, 38, 39) gerichtet erfolgt, wobei die Zulässigkeit der Verbindung vom vorhergehenden zum folgenden Basismodul (22, 23, 24, 26, 27, 28; 32, 33, 34, 36, 37, 38, 39) und umgekehrt überprüft wird, wobei bei der Validierung die Zulässigkeit des Informationsaustausches, insbesondere über gemeinsame Speicherbereiche oder Dateien, überprüft wird, und ggf. beim Zusammensetzen der Signalverarbeitungsvorschrift die Verwendung komplexer Datentypen nicht eingeschränkt wird.

12. Verfahren nach einem der Ansprüche 9 bis 11, **dadurch gekennzeichnet, dass** bei unzulässiger Verknüpfung von Basismodulen (22, 23, 24, 26, 27, 28; 32, 33, 34, 36, 37, 38, 39) bzw. bei Daten mit unzulässigen Datenformaten eine Fehlermeldung, insbesondere durch die beteiligten Basismodule (22, 23, 24, 26, 27, 28; 32, 33, 34, 36, 37, 38, 39), erzeugt wird.

## Claims

1. Method for process monitoring, control and/or adjustment, in which a signal processing instruction is formed on a computer-assisted user interface (2) by arranging and connecting symbols (6, 7) and generated by the computer from base modules (22, 23, 24, 26, 27, 28; 32, 33, 34, 36, 37, 38, 39) containing individual instructions, wherein a base module (22, 23, 24, 26, 27, 28; 32, 33, 34, 36, 37, 38, 39) is associated with each symbol (6, 7), and the individual instructions of the selected base modules (22, 23, 24, 26, 27, 28; 32, 33, 34, 36, 37, 38, 39) are linked together according to the graphic integration of the symbols (6, 7) for transmitting and/or processing data,
**characterised in**
**that** input data are processed by the formed signal processing instruction for generating output signals, and the data flow then resulting is controlled by a sequential control, which generates a dynamic processing sequence.

2. Method according to Claim 1, **characterised in that** the data flow is processed by the signal processing instruction in the form of data packets associated with individual base modules (22, 23, 24, 26, 27, 28; 32, 33, 34, 36, 37, 38, 39), the packet size of which is in particular freely determinable, and the sequential control establishes the computing readiness of the base modules (22, 23, 24, 26, 27, 28; 32, 33, 34, 36, 37, 38, 39).

3. Method according to Claim 2, **characterised in that**, upon each change in the input data at a base module (22, 23, 24, 26, 27, 28; 32, 33, 34, 36, 37, 38, 39), the sequential control determines the computing readiness thereof, wherein an inquiry is made in particular as to the presence of all required input data at the base module (22, 23, 24, 26, 27, 28; 32, 33, 34, 36, 37, 38, 39) and a processing priority associated with the base module (22, 23, 24, 26, 27, 28; 32, 33, 34, 36, 37, 38, 39) in order to enable the processing of the data packets by the individual instruction corresponding to the base module (22, 23, 24, 26, 27, 28; 32, 33, 34, 36, 37, 38, 39).

4. Method according to Claim 2 or 3, **characterised in that**, proceeding from source modules, those base modules (22, 23, 24, 26, 27, 28; 32, 33, 34, 36, .37, 38, 39) whose input data change, in particular by executing an individual instruction of a preceding base module (22, 23, 24, 26, 27, 28; 32, 33, 34, 36, 37, 38, 39), are tested for computing readiness.

5. Method according to any one of Claims 1 to 4, **characterised in that**, in the absence of computing readiness of all base modules (22, 23, 24, 26, 27, 28; 32, 33, 34, 36, 37, 38, 39), processing of the input data is continued respectively at the source modules (22, 32).

6. Method according to any one of Claims 1 to 5, **characterised in that** the data flow between the linked base modules, in particular in the case of several ready-to-compute base modules (22, 23, 24, 26, 27, 28; 32, 33, 34, 36, 37, 38, 39), is controlled by assigning priorities.

7. Method according to any one of Claims 1 to 6, **characterised in that** data packets which arrive at different times at the required inputs of a base module (22, 23, 24, 26, 27, 28; 32, 33, 34, 36, 37, 38, 39), in particular at different sampling rates, are synchronised by means of a data packet status.

8. Method according to any one of Claims 1 to 7, **characterised in that** input data, base module parameters or output data of the signal processing instruction are graphically represented on the user interface (2).

9. Method for process monitoring, control and/or adjustment according to any one of Claims 1 to 8, in which a signal processing instruction is composed of base modules (22, 23, 24, 26, 27, 28; 32, 33, 34, 36, 37, 38, 39), individual base modules (22, 23, 24, 26, 27, 28; 32, 33, 34, 36, 37, 38, 39) are interconnected via interfaces for transmitting information data, and processing takes place of the data in the base modules (22, 23, 24, 26, 27, 28; 32, 33, 34, 36, 37, 38, 39) of the signal processing instruction, **characterised in that**, when the signal processing system is composed of the individual base modules (22, 23, 24, 26, 27, 28; 32, 33, 34, 36, 37, 38, 39), a check is carried out, with reference to the additional information associated with the base modules (22, 23, 24, 26, 27, 28; 32, 33, 34, 36, 37, 38, 39) which are to be linked, as to whether a connection of two adjacent base modules (22, 23, 24, 26, 27, 28; 32, 33, 34, 36, 37, 38, 39) is allowable.

10. Method according to Claim 9, **characterised in that** an additional validation takes place when executing an individual instruction of a base module (22, 23, 24, 26, 27, 28; 32, 33, 34, 36, 37, 38, 39), in particular by checking the allowability of the data type, the units or the sampling rates of the information data.

11. Method according to Claim 9 or 10, **characterised in that** the validation of the allowability of the connection of two base modules (22, 23, 24, 26, 27, 28; 32, 33, 34, 36, 37, 38, 39) takes place directionally, wherein the allowability of the connection is checked from the preceding to the following base module (22, 23, 24, 26, 27, 28; 32, 33, 34, 36, 37, 38, 39) and vice versa, wherein, when carrying out the validation, a check is carried out as to the allowability of the information exchange, in particular via common storage areas or files, and the use of complex data types is optionally not restricted when composing the signal processing instruction.

12. Method according to any one of Claims 9 to 11, **characterised in that**, in the case of an unallowable link of base modules (22, 23, 24, 26, 27, 28; 32, 33, 34, 36, 37, 38, 39) or in the case of data with unallowable data formats, an error message is generated, in particular by the base modules (22, 23, 24, 26, 27, 28; 32, 33, 34, 36, 37, 38, 39) concerned.

## Revendications

1. Procédé de surveillance de processus, de commande et/ou de régulation, dans lequel une prescription de traitement de signal est générée sur une surface d'utilisateur (2) par disposition et combinaison de symboles (6, 7) et engendrée par le calculateur à partir de modules de base (22, 23, 24, 26, 27, 28 ; 32, 33, 34, 36, 37, 38, 39) contenant des prescriptions individuelles, un module de base (22, 23, 24, 26, 27, 28 ; 32, 33, 34, 36, 37, 38, 39) étant adjoint à chaque symbole (6, 7) et les prescriptions individuelles des modules de base (22, 23, 24, 26, 27, 28; 32, 33, 34, 36, 37, 38, 39) sélectionnés étant combinées les unes avec les autres en correspondance de la liaison graphique des symboles (6, 7) pour la transmission et/ou le traitement de données,
**caractérisé par le fait que** des données d'entrée sont extraites par la prescription de traitement de signal formée pour engendrer des signaux de sortie et la circulation de données qui en résulte est commandée par une commande à séquences qui engendre une suite de traitement dynamique.

2. Procédé selon la revendication 1,
**caractérisé par le fait que** la circulation de données est extraite sous la forme de paquets de données, dont la grandeur de paquet peut en particulier être déterminée librement, adjoints à des modules de base (22, 23, 24, 26, 27, 28 ; 32, 33, 34, 36, 37, 38, 39) individuels et la commande à séquences détermine la disponibilité de calcul des modules de base (22, 23, 24, 26, 27, 28 ; 32, 33, 34, 36, 37, 38, 39).

3. Procédé selon la revendication 2,
**caractérisé par le fait que** la commande à séquences détermine, pour chaque modification des données d'entrée à un module de base (22, 23, 24, 26, 27, 28 ; 32, 33, 34, 36, 37, 38, 39), sa disponibilité de calcul, la présence de toutes les données d'entrée au module de base (22, 23, 24, 26, 27, 28 ; 32, 33, 34, 36, 37, 38, 39) et une priorité de traitement adjointe au module de base (22, 23, 24, 26, 27, 28 ; 32, 33, 34, 36, 37, 38, 39) étant en particulier lues pour libérer le traitement des paquets de données par la prescription individuelle correspondant au module de base (22, 23, 24, 26, 27, 28 ; 32, 33, 34, 36, 37, 38, 39).

4. Procédé selon la revendication 2 ou 3,
**caractérisé par le fait que** sont testées sur la disponibilité de calcul, en partant de modules de source, ces modules de base (22, 23, 24, 26, 27, 28 ; 32, 33, 34, 36, 37, 38, 39) dont les données d'entrée se modifient, en particulier par l'extraction d'une prescription individuelle d'un module de base (22, 23, 24, 26, 27, 28 ; 32, 33, 34, 36, 37, 38, 39) précédent.

5. Procédé selon l'une des revendications 1 à 4,
**caractérisé par le fait que**, dans le cas d'une disponibilité de calcul manquante de tous les modules de base (22, 23, 24, 26, 27, 28 ; 32, 33, 34, 36, 37, 38, 39), le traitement des données d'entrée ou respectivement pour les modules de source (22, 32) est continué.

6. Procédé selon l'une des revendications 1 à 5,
**caractérisé par le fait que** la circulation de données entre les modules de base combinés, en particulier dans lé cas de plusieurs modules de base (22, 23, 24, 26, 27, 28 ; 32, 33, 34, 36, 37, 38, 39) disponibles au calcul, est commandée par attribution de priorités.

7. Procédé selon l'une des revendications 1 à 6,
**caractérisé par le fait qu'**une synchronisation chronologiquement différente a lieu, au moyen d'un état de paquets de données, aux paquets de données arrivant aux entrées obligatoires d'un module de base (22, 23, 24, 26, 27, 28 ; 32, 33, 34, 36, 37, 38, 39), en particulier dans le cas d'impulsions de balayage différentes.

8. Procédé selon l'une des revendications 1 à 7,
**caractérisé par le fait que** des données d'entrée, des paramètres de modules de base ou des données de sortie de la prescription de traitement de signal sont représentés graphiquement sur la surface d'utilisateur (2).

9. Procédé de surveillance de processus, de commande et/ou de régulation selon l'une des revendications 1 à 8, dans lequel une prescription de traitement de données est composée à partir de modules de base (22, 23, 24, 26, 27, 28 ; 32, 33, 34, 36, 37, 38, 39), des modules de base (22, 23, 24, 26, 27, 28 ; 32, 33, 34, 36, 37, 38, 39) individuels sont reliés les uns aux autres par l'intermédiaire d'interfaces pour la transmission de données d'information et les données sont traitées dans les modules de base (22, 23, 24, 26, 27, 28 ; 32, 33, 34, 36, 37, 38, 39) de la prescription de traitement de signal,
**caractérisé par le fait que**, lors de la composition de la prescription de traitement de signal à partir des modules de base (22, 23, 24, 26, 27, 28 ; 32, 33, 34, 36, 37, 38, 39) individuels, on contrôle, à l'aide d'informations additionnelles adjointes aux modules de base (22, 23, 24, 26, 27, 28 ; 32, 33, 34, 36, 37, 38, 39) à combiner, si une liaison de deux modules de base (22, 23, 24, 26, 27, 28 ; 32, 33, 34, 36, 37, 38, 39) adjacents est autorisée.

10. Procédé selon la revendication 9,
**caractérisé par le fait que**, lors de l'extraction d'une prescription individuelle d'un module de base (22, 23, 24, 26, 27, 28 ; 32, 33, 34, 36, 37, 38, 39), une validation additionnelle a lieu, en particulier par contrôle de l'autorisation du type de données, des unités ou des impulsions de balayage des données d'information.

11. Procédé selon la revendication 9 ou 10,
**caractérisé par le fait que** la validation de l'autorisation de la liaison de deux modules de base (22, 23, 24, 26, 27, 28 ; 32, 33, 34, 36, 37, 38, 39) a lieu de manière orientée, l'autorisation de la liaison étant contrôlée de module de base (22, 23, 24, 26, 27, 28 ; 32, 33, 34, 36, 37, 38, 39) précédent à suivant et inversement, l'échange d'information, en particulier sur des domaines de mémoire ou des fichiers de données communs, étant contrôlée lors de la validation et l'utilisation de types de données complexes n'étant pas limitée le cas échéant lors de la composition de la prescription de traitement de signal.

12. Procédé selon l'une des revendications 9 à 11,
**caractérisé par le fait que**, dans le cas d'une combinaison non autorisée de modules de base (22, 23, 24, 26, 27, 28 ; 32, 33, 34, 36, 37, 38, 39) ou respectivement dans le cas de données avec des formats de données non autorisés, un message d'erreur est engendré, en particulier par les modules de base (22, 23, 24, 26, 27, 28 ; 32, 33, 34, 36, 37, 38, 39) intéressés.
